# EUROPEAN PATENT APPLICATION

(11) **EP 4 632 654 A1**
(43) Date of publication of application: **15.10.2025**
(21) Application number: 25160687.7
(22) Date of filing: 27.02.2025
(51) Int. Cl.: G06Q 20/40, G06Q 50/26

(54) **SYSTEM AND METHOD OF RESOLVING, MONITORING AND UPDATING WATCHLIST PROFILES IN REAL TIME**

(30) Priority: 12.04.2024 US 202418634389
(71) Applicant: Socure Inc., Incline Village, Nevada 89451 (US)
(72) Inventor: LINN, Joshua, Incline Village, NV (US); KUMAR, Sumit, Incline Village, NV (US); AUSTIN, Alex, Incline Village, NV (US); KABIR, Md Yasin, Incline Village, NV (US); SIVAKUMAR, Vignesh, Incline Village, NV (US); HADDAD, Ali, Incline Village, NV (US); ABREU, Pablo Ysrrael, Incline Village, NV (US); GANIGA, Nikita, Incline Village, NV (US)
(74) Representative: Derry, Paul Stefan

(57) **Abstract**

Provided are a method and system for identity resolution as between a transaction applicant (TA) and a watchlist entity (WE). Identity characteristics sourced from the TA, preexisting watchlist data and other aggregated identity data (AID) are processed to provide for comparison among a collective identity of the TA and that of the WE. The collective identities may be updated in real time up until the instant watchlist tags are generated indicating a commonality of identity between the TA and WE. The indicated commonality can then be tested for the most current collective identity of the TA to generate a watchlist candidacy demonstrating a probability that the identity of the TA does or does not correspond to that of the WE.

## Description

### FIELD OF THE DISCLOSURE

Disclosed embodiments relate to identity correlation, and more specifically, to correlation of an identity to a watchlist identity using contextual inspection of and/or for the identity especially when identity characteristics defining the identity are subject to manipulation.

### BACKGROUND

A "watchlist" is ordinarily regarded as a listing of individuals (aka "watchlist entities" ("WEs")) who, because of various suspicion(s) associated with past activity, are identified as having a propensity to be malevolent actors. When considering other candidate individuals (herein "transaction applicants" ("TAs") who, it may turn out, may or may not matches for WEs, identification thereof can be of great societal benefit in thwarting crime or potential engagement in crime.

Traditional manner of such identification is mainly reliant on review of widely circulated watchlists, whether the circulation is provided by government or private entities. That review, all too often, is manual in nature, meaning that persons employed by those entities must grapple with, for instance, comparison of enormous amounts of ever-changing listing and delisting of WEs due to, in some instances, associated changes in WE movement between locations, changes in social media activity, and/or changes in thresholds for criteria qualifying the WE to be registered on a watchlist. Due to what can be an overwhelming burden in conducting such manual review, various types of error can be introduced leading to missed or incorrect watchlist identifications. For instance, error can arise from inappropriate comparison for names provided on a watchlist and/or associated with candidate individuals due to, simply or not so simply, volume of name listings, name misspellings, a variety of incorrect or inadequate personally identifiable information (PII), lack of consideration of aliases, etc. Circumventing watchlist misidentification, i.e., otherwise confirming watchlist candidacy, in the face of these and other types of error is crucial to the integrity of intended transactions, whether they be in the private or public sector.

### SUMMARY

It is to be understood that both the following summary and the detailed description are exemplary and explanatory and are intended to provide further explanation of the present embodiments as claimed. Neither the summary nor the description that follows is intended to define or limit the scope of the present embodiments to the particular features mentioned in the summary or in the description. Rather, the scope of the present embodiments is defined by the appended claims.

Embodiments may include a method and system regarding determining watchlist candidacy, including receiving identity characteristics corresponding to a transaction applicant (TA), receiving identity characteristics corresponding to a watchlist entity (WE), and receiving one or more aggregated identity data (AID) corresponding to one or more of the identity characteristics corresponding to the TA and the WE. The method and system may further include determining, based on the identity characteristics corresponding to the TA and the one or more AID corresponding to one or more of the identity characteristics corresponding to the TA and the WE, a first collective identity of the TA, and determining, based on the identity characteristics corresponding to the WE and the one or more AID corresponding to one or more of the identity characteristics corresponding to the TA and the WE, a first collective identity of the WE. Still further, the method and system may include receiving, in real time and according to a predetermined schedule, one or more of (a) one or more further identity characteristics corresponding to a TA, (b) one or more further identity characteristics corresponding to the WE, (c) one or more further AID corresponding to one or more of the identity characteristics corresponding to the TA and the WE, or (d) any combination thereof, and based on (a)-(d), updating the first collective identity of the TA and/or the first collective identity of the WE. Additionally, the method and system may include comparing the updated, first collective identity of the TA and/or the updated, first collective identity of the WE to a predetermined threshold, and based on the comparing, determining the updated, first collective identity or the collective identity as of the comparing of the respective TA and WE to be a respective final collective identity of the TA and the WE as of the comparing. Also, the method and system may include obtaining, via machine learning on the final collective identities of the TA and the WE, one or more watchlist tags, and obtaining, via other machine learning on the watchlist tags and the final collective identity of the TA, a watchlist candidacy for the TA.

Embodiments may also include a method regarding determining watchlist candidacy, including generating a collective identity for each of a transaction applicant (TA) and a watchlist entity (WE), wherein the collective identities are based on identity characteristics received continually, in real time, for the generating, and based on the collective identities, generating one or more watchlist tags each comprising one or more identity characteristics shared among the TA and the WE, and applying a machine learning model to the one or more watchlist tags and at least the collective identity of the TA and, in response, obtaining a watchlist candidacy for the TA.

In these regards, and as will be appreciated from the discussion(s) below, extensive feature engineering relative to one or more identity characteristics (e.g., name, address, historical data such as age) may be performed according to one or more aspects of the modeling herein to improve accuracy for a determination of watchlist candidacy of a TA with respect to a WE.

### BRIEF DESCRIPTION OF THE DRAWINGS

FIG. 1 illustrates elements of a Watchlist Comparison System (WCS) enabling inspection of a watchlist for an identity, according to embodiments herein;
FIG. 2 illustrates a high-level flow diagram of a process of correlating an identity relative to a watchlist to determine watchlist candidacy, according to embodiments herein;
FIG. 3 illustrates a flow diagram of a process for pre-processing one or more aspects of a watchlist and various forms of aggregated identity data (AID), according to embodiments herein;
FIG. 4 illustrates a conceptual diagram of an interface for receipt of one or more identity characteristics, according to embodiments herein;
FIG. 5 illustrates a conceptual diagram of a process of building a collective identity for identity characteristics received according to FIG. 4, according to embodiments herein;
FIG. 6 illustrates a conceptual diagram of an interface demonstrating resolution for a collective identity determined according to FIG. 5, according to embodiments herein;
FIG. 7 illustrates a conceptual diagram of organization, for a collective identity, of aggregated identity data (AID), according to embodiments herein;
FIG. 8 illustrates a flow diagram for determining watchlist tags for a collective identity of a TA, according to embodiments herein;
FIG. 8A illustrates a sub-process directed to determining the collective identities of a TA and a WE according to FIG. 8;
FIG. 9 illustrates a conceptual diagram of organizing one or more AID relative to a collective identity when determining watchlist tags;
FIG. 10 illustrates a flow diagram for determining a watchlist candidacy using watchlist tags; and
FIG. 10A illustrates a conceptual diagram demonstrating a comparison, for collective identities, that informs a watchlist candidacy;
FIG. 11 illustrates a conceptual diagram demonstrating various bases for updating a respective collective identity that informs a watchlist candidacy; and
FIG. 12 illustrates a high-level conceptual diagram demonstrating determination of a watchlist candidacy.

### DETAILED DESCRIPTION

The present disclosure will now be described in terms of various exemplary embodiments. This specification discloses one or more embodiments that incorporate features of the present embodiments. The embodiment(s) described, and references in the specification to "one embodiment", "an embodiment", "an example embodiment", etc., indicate that the embodiment(s) described may include a particular feature, structure, or characteristic. Such phrases are not necessarily referring to the same embodiment. The skilled artisan will appreciate that a particular feature, structure, or characteristic described in connection with one embodiment is not necessarily limited to that embodiment but typically has relevance and applicability to one or more other embodiments.

In the several figures, like reference numerals may be used for like elements having like functions even in different drawings. The embodiments described, and their detailed construction and elements, are merely provided to assist in a comprehensive understanding of the present embodiments. Thus, it is apparent that the present embodiments can be carried out in a variety of ways, and does not require any of the specific features described herein. Also, well-known functions or constructions are not described in detail since they would obscure the present embodiments with unnecessary detail.

The description is not to be taken in a limiting sense, but is made merely for the purpose of illustrating the general principles of the present embodiments, since the scope of the present embodiments are best defined by the appended claims.

It should also be noted that in some alternative implementations, the blocks in a flowchart, the communications in a sequence-diagram, the states in a state-diagram, etc., may occur out of the orders illustrated in the figures. That is, the illustrated orders of the blocks/communications/states are not intended to be limiting. Rather, the illustrated blocks/communications/states may be reordered into any suitable order, and some of the blocks/communications/states could occur simultaneously.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items. As used herein, the singular forms "a", "an" and "the" are intended to include the plural forms as well, unless the context clearly indicates otherwise.

The word "exemplary" is used herein to mean "serving as an example, instance, or illustration." Any embodiment described herein as "exemplary" is not necessarily to be construed as preferred or advantageous over other embodiments. Additionally, all embodiments described herein should be considered exemplary unless otherwise stated.

Aspects of the present disclosure are directed to identity correlations in the context of the hereinabove described watchlist. That is, correlations, or lack of correlations, can be determined for watchlist entities (WEs) and transaction applicants (TAs). In this regard, the correlations can be made in the context of public or private sector activities, such as, to name a few, travel regulation and enforcement, employment eligibility, financial transaction eligibility, eligibility for social media participation. Inspection for any such correlations or absence thereof can be conducted in real time according to continual, ever-changing development of watchlist and TA data records that, as can be appreciated, can be extremely difficult for modern assessment to keep adequate pace. As will be understood from the descriptions herein, the present embodiments can, through contextually supplementing a TA's supplied identity and/or a WE's watchlist identity, arrive at a determination as to a probability of whether that TA is indeed a match for a sufficiently comparable WE. The probability (i.e., a watchlist candidacy) can be informed, for instance, based on combinations of information not considered by traditional watchlist review, such as social media presence and participation, publicly available documents such those administered by governmental entities, privately-held PII databases, and/or various publications (e.g., newspaper articles, TA-authored writings, or TA curriculum vitae). In contrast with existing identity matching approaches which rely primarily on demographic factors, the present embodiments are distinguished by, at least, use of unsupervised semantic identity modeling along with graph-based clustering to associate identities with only minimal explicit attribute comparisons. In this way, the present embodiments can build holistic identity profiles combining both personal and network-ascertained contextual data. Determination of the probability in this way will be understood to, at least because of the continual nature of change of watchlist data and volume of TAs that can be assessed simultaneously in real time, be beyond the reach of calculations that could be reasonably performed in the human mind. Modeling, as discussed herein, is measured in terms of accuracy, precision, recall and Area Under the Curve (AUC) metrics. Models can, optionally, be retrained frequently on an augmented dataset containing all new labeled identities received through human review feedback. In these instances, retraining evaluates model degradation via accuracy metrics on a selected one or more test sets. Evaluation results indicating significant degradation can trigger human-in-the-loop analysis and model architecture improvements to restore baseline metrics. To promote fairness and transparency, model training incorporates techniques such as adversarial debiasing along gender and racial attributes. Match decisions, for identities, include highest weighted factors to enable explainability around triggers that can be reasons for a match decision. In these regards, an ethics review committee can evaluate model implementations and behaviors at least annually to, for instance, ensure the aforementioned debiasing. As a result of the capacities of the embodiments discussed herein, therefore, it will come to be appreciated that the disclosed embodiments provide a 360 degree perspective on a TA's identity and associated TA risk such that false positives and false negatives for watchlist detection may be substantially eliminated.

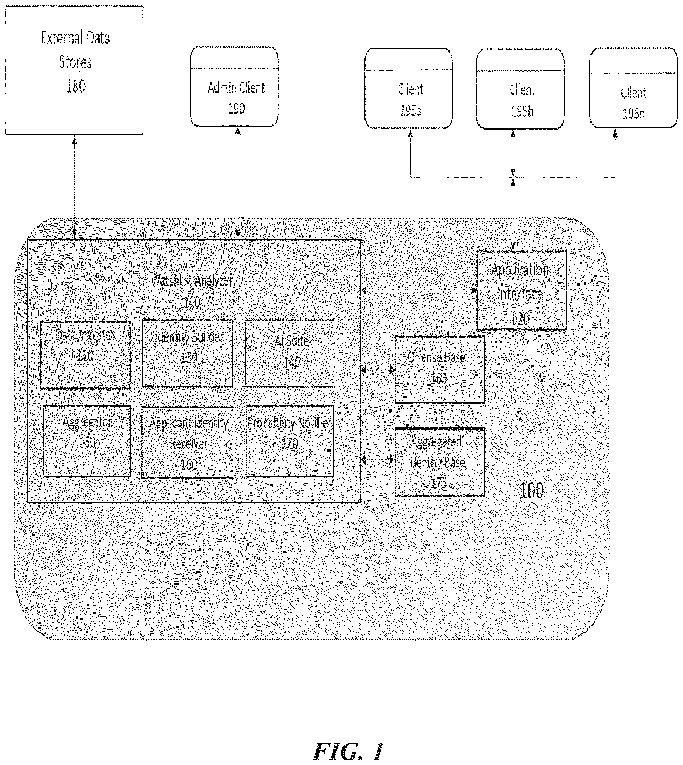

Referring to FIG. 1, there is illustrated a Watchlist Comparison System (WCS) 100 according to one or more embodiments herein. WCS 100 may reside on a single cloud based server although it is also possible for various components of WCS 100 (as described herein) to reside on separate servers. By way of example, WCS 100 may be a computer implemented application which resides on a computing server. As will be apparent from the discussion herein, WCS 100 may include and/or implement all appropriate software (e.g., algorithms) and/or hardware (i.e., storage, processors) for carrying out its applicable identity correlation (i.e., determination of resolution a TA identity to a WE identity) and related capabilities.

WCS 100 preferably includes Watchlist Analyzer 110, which itself is comprised of a number of modules as discussed further herein. Watchlist Analyzer 110 operates to detect patterning of identity data (and other data as discussed herein) that can be inspected for correlation to a watchlist. These detections are generated in response to requests originating from clients 195a, 195b .... 195n. WCS 100 may be accessed through the internet or any other private or public network by one or more clients 195.

Each of clients 195 may be personal computers, laptops, handheld computing devices such as smartphones or tablets or any other device capable of providing the required connectivity and display. In some embodiments, a client 195 may be a computing application operated by a customer subscribed to WCS 100 which requires identity correlation data to process transaction requests. For example, client 195 may be an application or set of applications operated by a financial institution which processes requests for new credit cards made by customers of that financial institution. Herein, the terms "transaction," and "transaction request" can mean any event for which identity can be detected via analysis and scoring of information used in connection with the event, and include, for example, an application for a business or other type of account opening, an application providing an account information update, an application for a credit check, any type of application for a background check or identity verification, an application for an employment check or verification, etc. That is, the subject information for which identity may be detected can be information submitted during an initial stage (i.e., application stage) of an activity toward which an application is directed (e.g., account opening, employment, etc.). In these regards, for instance, it is contemplated that embodiments herein may be employed to detect correlation of TA identity information to that of a WE in regard to a transaction request. For example, it is contemplated that embodiments herein can detect correlation for information submitted as part of any of the aforementioned applications such that the activity toward which an application is directed (e.g., an account opening) ought not to proceed.

Clients 195 interact with WCS 100 such that data may be communicated between them via application interface 120 and such that WCS 100 may process identity correlation requests made by clients 195 with regard to one or more of the above types of applications made by individuals or entities such as organizations. Application interface 120 may comprise one or more application programming interfaces (APIs) that permit applications associated with clients 195 to communicate with WCS 100.

Also shown in FIG. 1 is admin client 190. Admin client 190 may comprise a personal computers, laptops, handheld computing devices such as smartphones or tablets or any other similar device. Admin client 190 is operative to allow users to configure, maintain and support the operation of WCS 100. For example, a user may use admin client 190 to interact with WCS 100 to set parameters regarding what is required to invoke the correlations between a TA and a WE as discussed in further detail below.

External data stores 180 may also be present according to the teachings of one or more embodiments herein. External data stores 180 may comprise one or more external databases, data sets, systems, applications, rules bases and/or other sources of data which are used by WCS 100 to generate identity correlations as further described herein. By way of example, external data stores 180 may comprise credit reporting databases, public and/or private demographic databases, reported and known fraud data, financial transaction data, social media data, public licensing databases as well as other sources of data useful to WCS 100 in generating identity correlation.

Returning now to the specific components of WCS 100, WCS 100 may include various components for correlating a TA to a WE. In these regards, it will be understood that correlation of the TA may be to a specific entity provided on a watchlist such that, as will be understood from the discussions herein, a probability of a match for the TA may be discerned.

WCS 100 may reside on one or more physical servers. These servers may include electronic storage, one or more processors, and/or other components. The servers may also include communication lines, or ports to enable the exchange of information with a network and/or other computing platforms. The servers may include a plurality of hardware, software, and/or firmware components operating together to provide the functionality attributed herein to WCS 100.

Electronic storage associated with the servers may comprise non-transitory storage media that electronically stores information. The electronic storage media of electronic storage may include one or both of system storage that is provided integrally (i.e., substantially non-removable) with servers and/or removable storage that is removably connectable to the servers via, for example, a port or a drive.

Electronic storage may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage may include one or more virtual storage resources (e.g., cloud storage, a virtual private network, and/or other virtual storage resources). Electronic storage may store software algorithms, information determined by processors, information received from servers, information received from clients 195, and/or other information that enables the servers to function as described herein.

While an exemplary architecture is described above, it will readily be understood by one of skill in the art, that an unlimited number of architectures and computing environments are possible while still remaining within the scope and spirit of the present embodiments.

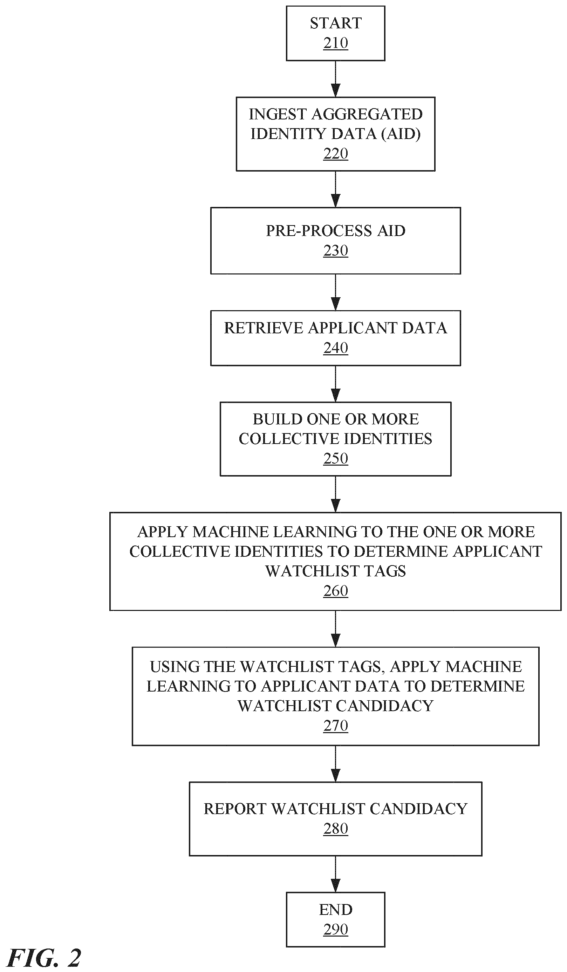

Returning now to the specific components of WCS 100 shown in FIG. 1, Watchlist Analyzer (hereinafter "WA 110") includes various components which are described hereinbelow. Operation(s) of each of these WA 110 components will be described in further detail below with reference to FIG. 2.

In one or more embodiments, WA 110 can include a data ingester 120, an identity builder 130, an artificial intelligence (AI) suite 140, an aggregator 150, an applicant identity receiver 160, and a probability notifier 170. One or more of these components can, via operation of the WCS 100, be cooperable with a constituent offense base 165 and an aggregated identity base 175 for purposes described herein.

More specifically, data ingester 120 can be cooperable with external data stores 180 to retrieve, for example, myriad watchlist data, social media data, privately held identity data, geolocation data, publications such as books, curriculum vitae, newspapers, and other identity data for an individual such as arrest records, court documents, tax records, licensing data, etc. The ingestion can be continuous or according to a timeframe determined by a particular configuration of WCS 100.

Identity builder 130 can be cooperable with AI suite 140 to, for example, process data retrieved by data ingester 120 to recognize and resolve error in ingested data. In these regards, the types of error may be manifested by name misspelling or reversal, incompleteness in PII, duplicate name listing, etc. One or more instances of natural language processing (NLP), unsupervised and/or supervised machine learning may be implemented to resolve the error. Still further, AI suite 140, may be configured to, in one or more embodiments and in accordance with data ingested by data ingester 120 and retrieved by identity builder 130, implement NLP to determine various characteristics for the data. For example, such a characteristic can be a sentiment (i.e., positive or negative) of an ingested news article. Should the sentiment be determined as being negative, identity builder 130 can operate to ascertain, for instance, whether the sentiment is associated with a financial crime, and if so, whether such financial crime correlates to a recognized predicate offense categorized by entities such as the Financial Action Task Force (FATF) on Money Laundering and catalogued in offense base 165 to include, for example, arms trafficking, corruption and bribery, counterfeiting currency, counterfeiting products, drug trafficking, environmental crime, extortion, forgery, fraud, human trafficking, insider trading and market manipulation, kidnapping, illegal restraint, and hostage-taking, organized crime/racketeering, piracy, robbery or theft, sexual exploitation, smuggling, terrorism/terrorist financing, trafficking in stolen goods, and violent crime (murder and grievous bodily injury). Based on any determination that the correlation exists, identity builder 130 can then extract entities mentioned in the news article. These and other capabilities of identity builder 130 are discussed in more detail in connection with FIG. 2.

Using the processed listed WE and extracted entity information such as may correlate to a predicate offense, aggregator 150 may then forward that data to aggregated identity base 175, where it can be retained for comparison against identity information retrieved by applicant identity receiver 160.

In connection with one or more of data continually ingested by data ingester 120, retrieved at applicant identity receiver 160, and stored in aggregated identity base 175, AI suite 140 can implement one or more iterations of unsupervised machine learning to derive watchlist tags which can be one or more combinations of data inspected by WCS 100, and stored in aggregated identity base 175. Additionally, AI suite 140, in use of such watchlist tags, can further implement one or more iterations of supervised machine learning to ascertain a watchlist candidacy for a TA, i.e., an applicant whose identity has been received via a client 195. Such a candidacy can be expressed as a probability that the identity of the TA matches that of a WE, (i.e., a TA-WE correlation score), with increasing percentage in the probability indicating it is more likely than not that a match exists. For instance, the probability of 0.22 would be indicative that a match is unlikely as opposed to a probability of 0.95 indicating a match is virtually certain. Once ascertained, probability notifier 170 can report the probability together with reason codes (e.g., different age, different middle initial indicative of lack of candidacy) to a requester implementing a client 195.

In these ways and through the apparatuses discussed above, WCS 100 can, for a request submitted by a subscriber to WCS 100, gauge and report the likelihood that an applicant of the subscriber embodying a TA is or is not a match for a WE that is known to exist on one or more current watchlists.

In referring to FIG. 2, there is shown a process implemented by WCS 100 when determining a watchlist candidacy for a TA that can be an applicant in one or more of a public and private sector transaction. The process can begin at 210 and be implemented whenever such a transaction is proposed by either the entity operating a client 195 or the TA.

At 220, WCS 100 can ingest aggregated identity data (AID) from, for example, external data stores 180 of FIG. 1. Here, the AID can include, for example, myriad watchlist data, social media data, privately held identity data, geolocation data, publications such as books, curriculum vitae, newspapers, and other identity data for an individual such as arrest records, court documents, tax records, licensing data, etc. In some implementations, the ingestion can be continual such that as watchlists and these other types of data are updated, those updates are received by WCS 100. In some implementations, the ingestion can be targeted such that only data having one or more PII corresponding to a TA's input identity can be retrieved via the ingestion.

At 230, WCS 100 can pre-process the AID ahead of receiving a TA's identity characteristics and, once processed, store that processed AID in aggregated identity base 175. For instance, ingested watchlist data having name misspelling, reversal (first, last, etc.) can be processed by the WCS 100 according to NLP to correct the subject error. Where the AID includes other publicly available information such news articles, for example, WCS 100 can determine a sentiment of an article, i.e., its polarity, via, for example, one or more Support Vector Machines (SVM) and if the same is negative and involves a financial crime that is mappable to a predicate offense via, for example, Decision Trees, WCS 100 can implement NLP to capture contextual meaning and learn complex language patterns via artificial neural networks and transformers. WCS 100 can extract entities via transformer models and assign, via, for example, a Hidden Markov Model (HMM) and Large Language Model (LLM), their roles according to the context of the article. Frameworks such as PyTorch, Keras, and TensorFlow can be incorporated to provide tools including layers, optimizers, and automatic differentiation to help implement and train one or more the models.

At 240, WCS 100 can retrieve applicant data corresponding to a TA via, for example, identity receiver 160. Here, such data can include identity characteristics such as first and last name, date of birth (DOB), residence address, social security number, email address, phone number, crypto handle, national id., etc. Using these characteristics, WCS 100 can, at 250 and as is detailed with reference to discussion hereinbelow, build one or more collective identities for the TA that can be stored in aggregated identity base 175 and that can contextualize an identity received from the TA so as to, for example, resolve falsehoods, expand upon, and/or uncover one or more identity characteristics provided by a TA during the applicant data retrieval. For instance, such contextualization may be derived from the ingested AID that can include, for example, myriad watchlist data, social media data, privately held identity data, geolocation data, publications such as books, curriculum vitae, newspapers, and other identity data for an individual such as arrest records, court documents, tax records, licensing data, etc.

At 260, WCS 100 uses the one or more collective identities of the TA to determine watchlist tags, i.e., one or more traits and identity characteristics that, when compared to watchlist data (defining WE identity characteristics) and AID already processed by WCS 100, are "shared" with a WE such that the commonality is based on one or more same TA and WE identity characteristics. In this regard, WE identity characteristics may, for example and as will be appreciated, be determined according to the processed watchlist data and one or more of the AID as referred to hereinabove. In determining the watchlist tags, WCS 100 can initially employ unsupervised learning (e.g., k-means, HMM, Apriori) to cluster and associate identity characteristics received from the TA into TA identity groupings. Here, WCS 100 can further employ a long short-term memory (LSTM) algorithm on the groupings to achieve further refinement and classification for the groupings. Once determined, the watchlist tags can be stored in aggregated identity base 175 in connection with a collective identity of a TA.

At 270, WCS 100 can, using the LSTM refined identity groupings for the TA, determine a watchlist candidacy as a probability that the TA matches a WE. In doing so, WCS 100 is configured to employ one or more machine learning models to achieve the candidacy and reason codes for the candidacy in which the models are trained using supervised learning. A "machine learning model" or "model" as used herein, refers to a construct that is trained using training data to make predictions or provide probabilities for new data items, whether or not the new data items were included in the training data. For example, training data for supervised learning can include positive and negative items with various parameters and an assigned classification. Examples of models include: neural networks (traditional, deeps, convolution neural network (CNN), recurrent neural network (RNN)), support vector machines, decision trees, decision tree forests, Parzen windows, Bayes, clustering, reinforcement learning, probability distributions, decision trees, and others. Models can be configured for various situations, data types, sources, and output formats.

At 280, and prior to ending processing at 290, WCS 100 can report the watchlist candidacy together with accompanying reason codes to a requester implementing, for example, a client 195. In some embodiments, WCS 100 can retrieve feedback from the requester as to whether the predicted watchlist candidacy is appropriate and use the feedback to improve design for modeling at least at 270.

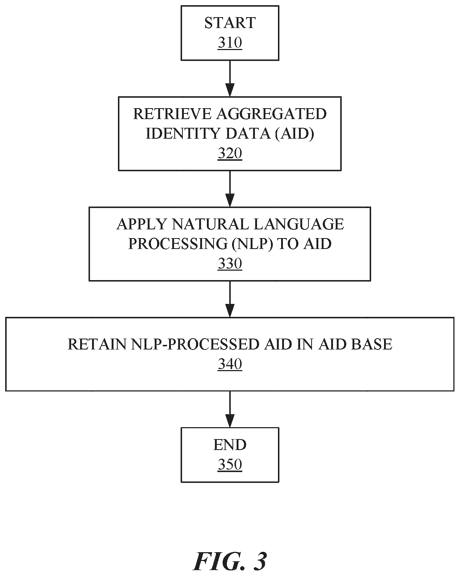

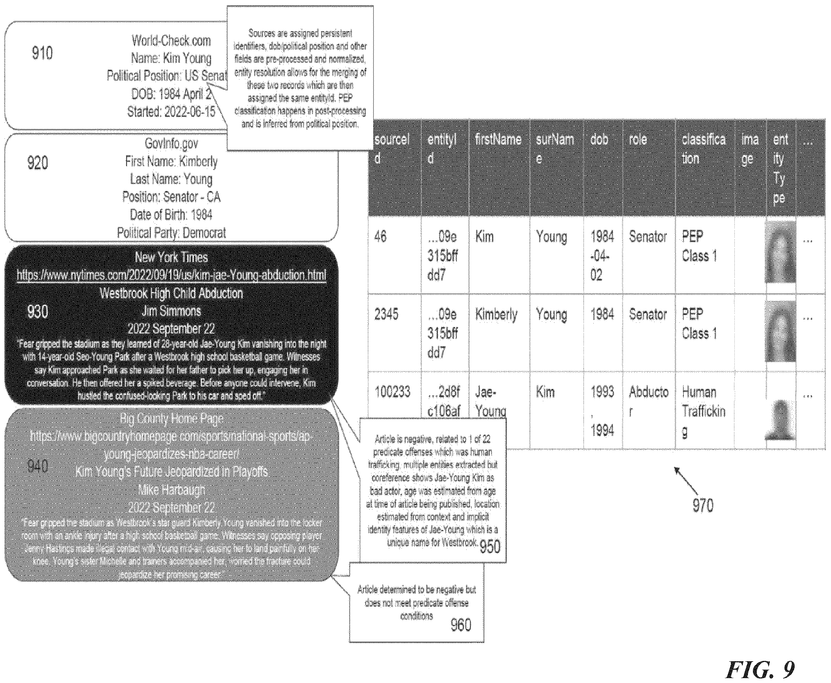

In referring to FIG. 3, there is illustrated a process undertaken by WCS 100 at 310 to pre-process watchlist and other aggregated identity data (AID). Here, such watchlist data and AID can be retrieved, at 320, through ingester 120 (see FIG. 1) continually throughout operation of WCS 100, or alternatively, such receipt can be triggered in accordance with receipt of TA identity characteristics. Upon receipt, WCS 100 can, as has been discussed, conduct processing to include rectification of various data error (spelling, reversals, etc.), and sentiment analysis on writing(s). In some embodiments, the processing can include extraction of imaging of entities, coreference for an entity, entity classification (i.e., role), predicate offense classification, and normalization of data. At 330, WCS 100 can apply NLP to the various AID to discern characteristics such as sentiment, predicate offense classification, role, etc. Further discussion of the application of NLP is provided below with respect to FIG. 9. At 340 and prior to ending a pre-processing stage for watchlist data and other AID, processed watchlist data and other AID can be retained in AID base 175 (see FIG. 1).

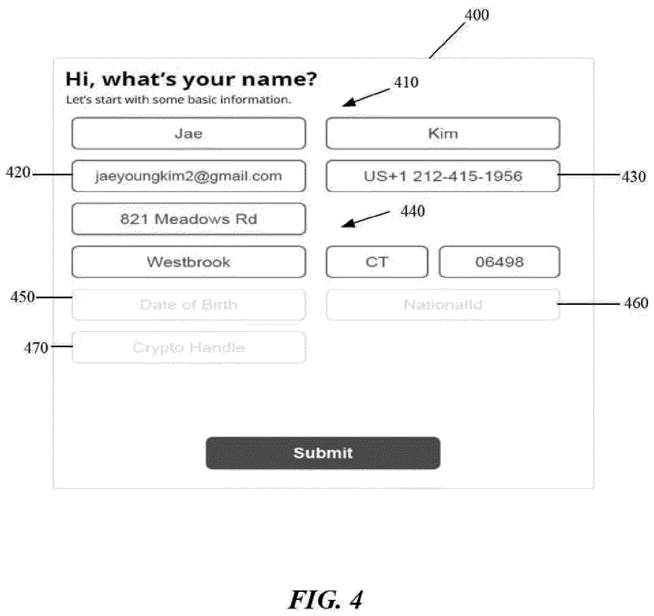

Relative to building a collective identity for a TA as discussed above, FIGS. 4-6 illustrate, respectively, intake of a TA's identity characteristics, construction of a corresponding collective identity, and resolution of that identity based on, for instance, watchlist data and other AID processed according to FIG. 3.

Thus, in referring to FIG. 4, there is shown a typical interface 400 administered through, for instance, a client 195, in which a TA may enter various identity characteristics, including name 410, email address 420, phone number 430, address 440, DOB 450, national id 460, and crypto handle 470.

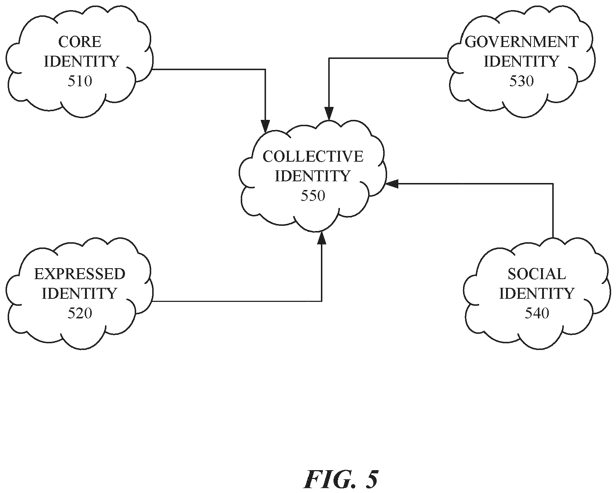

Using the identity characteristics obtained via the interface of FIG. 4, WCS 100 can, as is illustrated in FIG. 5, build a collective identity that serves to supplement the identity characteristics and add context to the TA identity characteristics already provided. In this way, WCS 100 can uncover an identity footprint for the TA that may serve to verify the provided identity characteristics, reveal falsity thereof, or supplement the TA identity. Examples of the various identities that can provide that footprint, and serve to build such a collective identity, are shown in FIG. 5, and include a core identity 510, an expressed identity 520, a government identity 530, and a social identity 540 that each contribute to a collective identity 550 derived by WCS 100. In these regards, each of the identities can, with respect to the TA identity characteristics already provided, be derived from continual ingestion and inspection of watchlist data and other AID and/or when WCS 100 undertakes to inspect already processed watchlist data and other AID gathered in aggregated identity base 175. More particularly, core identity characteristics 510 can include, for example, name, DOB, gender, place of birth, nationality, ethnicity, facial imaging, and biometric data. Expressed identity characteristics 520 can include, for instance, any nickname, identity manipulation (e.g., name truncation or other alteration), cultural or group affiliation, languages spoken, travel history, behavioral patterns (e.g., work and/or social scheduling). A non-exhaustive listing of identity characteristics that can define a government identity 530 can include national identification, passport and licensing information, citizenship and any changes thereto, civil and/or criminal records, and immigration status. Social identity characteristics may be exemplified by email address, phone number, residence address, IP address, computing device identifiers, social media subscription and participation, crypto handle, socio-political affiliation, employment history (including position(s)), social connection (e.g., family, friends, associates), ancestry, and political engagement.

As will be evident from inspection for the above identities leading to construction of the collective identity 550, it will be appreciated that, for any one identity, WCS 100 can discern certain explicit identity features, such as name, DOB, etc. Additionally, WCS 100 can discern certain auxiliary identity characteristics based on ingested watchlist data and/or other AID. A first type of these auxiliary characteristics includes implicit identity features determined by the WCS 100 implementing NLP on certain AID (e.g., news articles) to discern, for example, name etymology and/or age at time of publication of a news article. A second type of auxiliary characteristics includes, with respect to identity characteristics for a TA, features that may be resolved from intake and processing of identity characteristics aimed at determining identity verification. For a more detailed discussion of such intake see commonly owned U.S. Patent No. 10,956,916, entitled, "Self Learning Machine Learning Pipeline for Enabling Identity Verification," issued on March 23, 2021, and U.S. Patent Application Publication No. 2023/0230088, entitled "Method and System of Predictive Document Verification and Machine Learning Therefor," each of which is incorporated by reference herein in its entirety. A third type of auxiliary characteristics may include any type of financial crime data that may be implicated by the identity characteristics that are retrieved for the TA. In regard to the numerous types of inspection described above, it is to be understood that the WCS 100 may continually, in real time, cross-reference one or more types of inspected data to ensure alignment of the collective identity 550. For instance, WCS 100 may inspect and verify whether an implicitly derived age of an actor from an item of AID accurately corresponds to an age verified according to government records where such an actor is the TA. Likewise, WCS 100 may passively inspect whether geolocation identifying data (e.g., IP address) of a device registration for social media participation corresponds with sufficient regularity to suggest that the data indicates a residence address for a TA as reported on a government issued form of identification. Thus, for these and other types of inspections of TA identity characteristics for processed watchlist data and other processed AID, WCS 100 can resolve the TA's identity to uncover further TA identity characteristics.

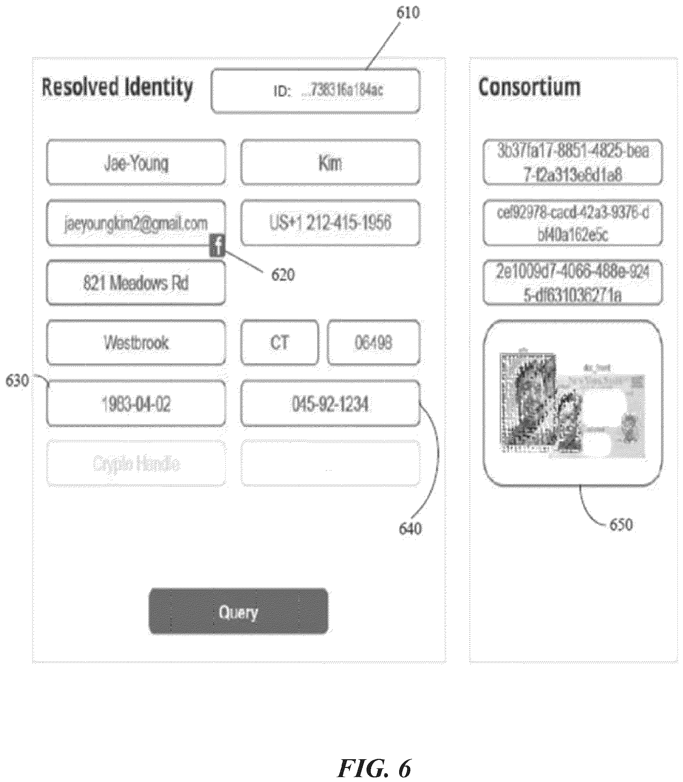

In referring to FIG. 6, there is shown an exemplary interface displaying such further TA characteristics that the above-discussed inspections can reveal using identity characteristics supplied by the TA as in FIG. 4. For instance, for a resolved identity assigned a unique identifier 610, WCS 100 can reveal social media participation 620, as well as DOB 630 and social security number 640. Additionally, one or more of these further identity characteristics in combination with those supplied by the TA in FIG. 4 can reveal facial imaging 650.

While discussion thus far has provided that the WCS 100 can build a collective identity for a TA, so, too, can such a collective identity be built by WCS 100 for a known WE. In this regard, the WE collective identity can be built in the same manner as that of a TA since placement on a watchlist and AID (e.g., myriad other watchlist data, social media data, privately held identity data, geolocation data, publications such as books, curriculum vitae, newspapers, and other identity data for an individual such as arrest records, court documents, tax records, licensing data, etc.) implicating the WE can be similarly inspected by WCS 100. Likewise, WCS 100 can build any such collective identity for any entity revealed by watchlist data and AID that has been ingested. As such, any collective identity corresponding to a WE or AID revealed entity can be stored in aggregated identity base 175 (see FIG. 1).

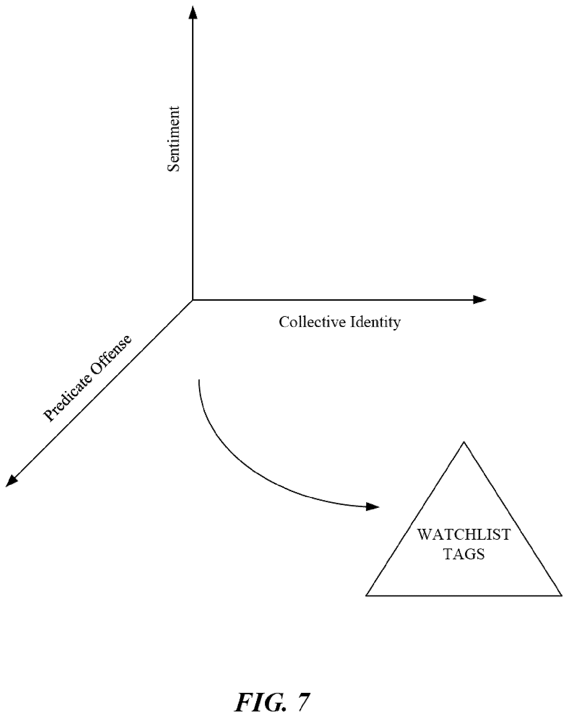

In these regards and when referring to FIG. 7, there is illustrated, for a collective identity of a WE or other AID revealed entity, the conceptual application of unsupervised learning together with LSTM modeling to form watchlist tags that may be used in determining watchlist candidacy for a TA. For example, based on appearance of a given entity's name in an item of AID having negative sentiment that is mappable to a predicate offense, such a collective identity can be discerned by WCS 100 to correspond to watchlist tags including, for example: middle-aged, male, surname Kim, human trafficking, Westbrook, geolocation, number of name appearances in an item of AID.

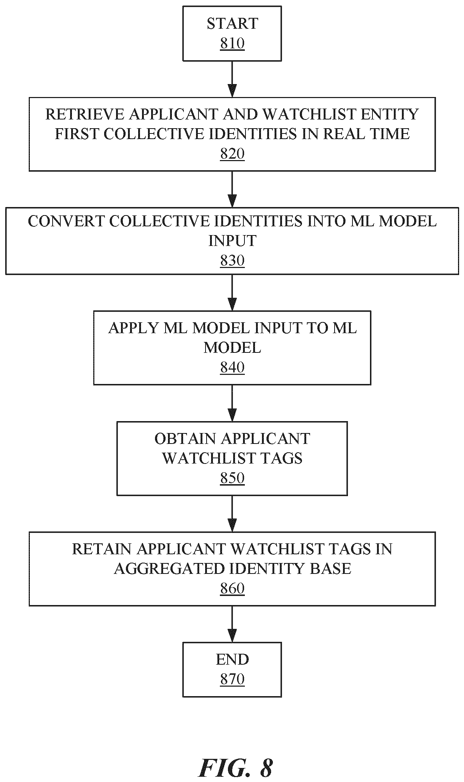

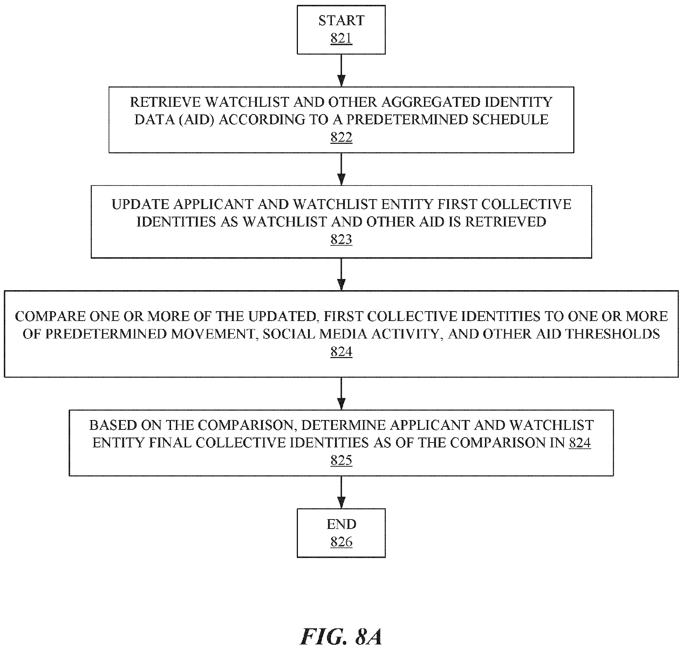

Referring to FIG. 8, there is illustrated a process for determining watchlist tags with respect to a first collective identity that may be built for each of a TA and a WE. The process can begin at 810 and proceed to 820 whereat the WCS 100 can retrieve the collective identity of a TA and a WE (for example, from aggregated identity base 175 of FIG. 1). At 830, WCS 100 can convert the TA's and the WE's collective identities into ML model input. For example, an unsupervised machine learning model (e.g., k-means, HMM, Apriori) can be configured to receive respective sparse vectors each with vector slots filled by characteristics for the collective identity of the TA and/or the WE. Values for the vectors can be representative of the types of characteristics. At 840, WCS 100 can apply the input to the unsupervised model and additionally implement one or more LSTM algorithms on the model output to refine (i.e., classify commonality with WE identity characteristics) the same such that TA tags are obtained at 850. Once obtained, the tags can, prior to operations ending at 870, be retained at 860 in aggregated identity base 175 of FIG. 1. In this regard, and as has been discussed above, WCS 100, can, as a result of receiving the input comprising both TA and WE identity characteristics, resolve the TA identity characteristics as against the WE identity characteristics to result in the TA tags demonstrating commonality among the sets of TA and WE identity characteristics.

In referring to FIG. 8A and with respect to the retrieval of TA and WE first collective identities discussed in reference to 820 of FIG. 8, there is illustrated a sub-process according to which such retrieval may be defined. Such a sub-process may be performed whenever a TA attempts a transaction as defined herein, or otherwise when a transaction vetting procedure for a TA is desired and instituted by a subscriber to WCS 100.

In particular, the process of FIG. 8A can begin at 821 and proceed to 822 whereat WCS 100 can retrieve WCS 100 watchlist and other AID from external data stores 180 according to a predetermined schedule. In review of the discussion provided herein in respect of FIG. 2, the aforementioned retrieval may be, in some embodiments, continual (so as to reflect all data and associated updates available through external data stores 180) or otherwise triggered by a TA's input of various PII such that the retrieval is targeted to match one or more of the PII (say, for instance, upon a TA attempting a transaction). That is, the predetermined schedule according to which processed watchlist data and other AID may be retrieved can vary depending upon a configuration of WCS 100.

Throughout the course of the retrieval of data from external data stores 180 and processing thereof (according to NLP, for example), WCS 100 can, at 823, update in real time TA and WE first collective identities to achieve updated, first collective identities. Subject matter for the update can be voluminous and processed by WCS 100 in real time to account for, for example, changes in watchlist listing and delisting, changes in social media activity, movement by a TA or WE, writing and other mention of and/or by a TA or WE, as well as changes in certain types of publicly available information (e.g., arrest records, court documents, tax and/or property records, licensing, etc.). In these regards, it will be recognized that analytics corresponding to changes in, for example, social media activity and movement by a TA and/or a WE, can be detected passively via, for example, IP addresses of devices used in connection with such social media activity and movement when a TA and/or a WE engages such devices to, for example, make certain name, address, or other PII registrations.

To reiterate in respect to the aforementioned discussion of first collective identities of a TA or WE, such identities can be updated according to the above-discussed real-time processing to resolve falsehoods, expand upon, and/or uncover one or more identity characteristics for each of a core identity, expressed identity, government identity, and/or social identity that can comprise a collective identity of a respective TA or WE.

At 824, WCS 100 can compare, in real time, the one or more updated, first collective identities corresponding to a TA and a WE to, for example, one or more predetermined movement, social media activity and other AID (e.g., property, educational, licensing registration) thresholds. The comparison can be performed as watchlist data and other AID is retrieved according to the aforementioned predetermined schedule (i.e., upon continuous or triggered retrieval). For instance, one or more of the aforementioned thresholds can be used by WCS 100 to determine whether an updated, first collective identity qualifies as a final collective identity as of the comparison and based on the threshold. In this regard and taking the movement threshold as an example, WCS 100 can assess all received watchlist and other AID to determine whether an address or other identity characteristic change, reported on data sources including, for example, a watchlist, educational records, property records, licensing records and/or self-reporting on social media, is a change that corresponds to the TA or WE's updated, first collective identity or forms a new identity (i.e., final identity) for the TA or WE as of the time of the comparison. In such a case, the threshold can be measured with respect to the same address change appearing on a predetermined number of the data sources and/or within a predetermined time interval. That is, a predetermined movement threshold can be met or exceeded when the address change appears, for example, on at least two of the aforementioned data sources and/or within the last two days, where detection for the change is determined based on comparison of a prior address (received, for example, at 823) to a received updated or current address (received, for example, at the time of the comparison in 824). In some embodiments, if registrations for social media activity are varied, though by a same entity and for a same platform (e.g., INSTAGRAM), then one or more of the collective identities as of the comparison for the threshold can be designated a final collective identity according to, or in response to, the variations meeting or surpassing a predetermined registration and/or variation threshold, i.e., where, for instance, the same identity is linked to the registration(s) via another identity characteristic (e.g., email address). In other words, if a social media activity registration (e.g., name, phone, number, address, etc.) of a considered identity differs from the updated, first collective identity at the time of the comparison in block 824, then the registration at the time of the comparison can be a constituent component of a final collective identity for a TA or WE. If the threshold is not met, the most prior updated, first collective identity can be designated a final collective identity. In some embodiments, other types of predetermined thresholds for other types of AID can serve as the gauge by which a collective identity as of the comparison can be designated a final collective identity by WCS 100. For instance, where NLP on an inspected instance of adverse media, such as a news article, classifies the subject matter of that article as concerning a first predicate offense corresponding to an updated, first collective identity, circumstances provided by the article may be gauged (i.e., measured) against a predetermined contextual content threshold (e.g., "y" indications of violence or falsehood beyond a predetermined contextually expected "x" indications) that would qualify the subject matter as also relating to one or more other predicate offenses. Here, examples of such circumstances against which a comparative threshold can be measured could include mentioned currency amount, number of violent acts or actions, amount or amounts of goods or services regarding theft, deceit, or falsehood. In these regards, predicate offenses to which the predetermined contextual content threshold may be applied may include those recognized by the FATF, including, for example, arms trafficking, corruption and bribery, counterfeiting currency, counterfeiting products, drug trafficking, environmental crime, extortion, forgery, fraud, human trafficking, insider trading and market manipulation, kidnapping, illegal restraint, and hostage-taking, organized crime/racketeering, piracy, robbery or theft, sexual exploitation, smuggling, terrorism/terrorist financing, trafficking in stolen goods, and violent crime (murder and grievous bodily injury). That is, if the circumstances indicate another predicate offense, the threshold would be met, and the collective identity can be determined as of the comparison and qualified as a final collective identity such that that identity may be associated to at least a pair of predicate offenses. Another type of predetermined AID threshold (determinative of whether the updated, first collective identity or the identity according to the comparison is designated a final collective identity) may include a licensure threshold that is met where inspected AID for a TA or WE indicates application for same or different licensure in a same jurisdiction or differing jurisdictions, and where the TA or WE has applied using a same or differing combination of identity characteristics as determined by one or more other identity characteristics compiled for a respective core identity, expressed identity, government identity, and/or social identity. It is to be understood that the above types of thresholds are merely a non-exhaustive listing thereof that may be used in connection with determining a TA's or WE's final collective identity in regard to any of, for example, watchlist data, social media data, privately held identity data, geolocation data, publications such as books, curriculum vitae, newspapers, and other identity data for an individual such as arrest records, court documents, tax records, licensing data, etc. At 825, and prior to ending operations as 826, WCS 100 can, based on the comparison at 824, determine TA and WE final collective identities as of the timing of the comparison as has been discussed with respect to block 824. In other words, WCS 100 can determine that a collective identity according to the comparison or a most prior collective identity (i.e., an updated, first collective identity) for the TA and/or the WE can be the designated final collective identity depending on whether the threshold is met or exceeded. In this way, WCS 100 can, due to the discussed updating and comparing occurring in real time for the aforementioned predetermined schedule and up until the very instant that TA watchlist tags are determined at block 850 in FIG. 8, provide the utmost current basis for generation of those tags that indeed accounts for any ongoing evolution of watchlist data, identity characteristics and other AID. As will be appreciated from the above discussion, WCS 100 can formulate the final collective identity of the TA and/or the WE in real time through its construction of associations for data exhibited from numerous and disparate sources for identity characteristics.

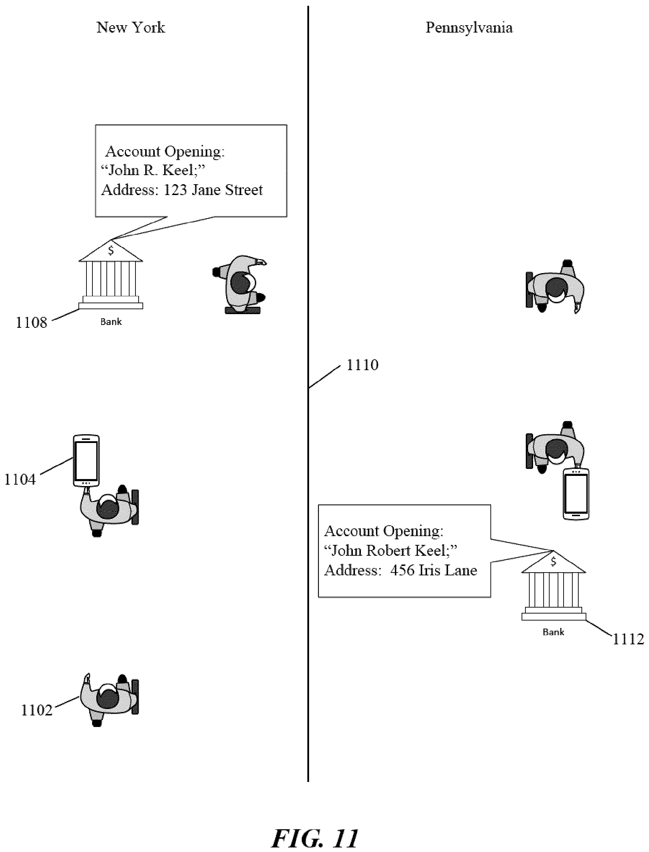

With reference to FIG. 11, there is a conceptual diagram demonstrating various bases for updating a respective collective identity that informs a watchlist candidacy. In the exemplary case as shown, TA 1102 is registered to cellular device1 104 and opens a bank account at WCS 100 subscribed Bank 1108 in New York and a bank account at WCS 100 subscribed Bank 1112 in Pennsylvania. As noted, TA 1102 opens the New York account under the partially abbreviated name of "John R. Keel," with an address of 123 Jane Street in New York. Only one day later, TA 1102 crosses the jurisdictional boundary 1110 and opens the Pennsylvania account under the full name of "John Robert Keel," with an address of a residence newly purchased at 456 Iris Lane in Pennsylvania. Each account opening required TA 1102 to undergo a communication verification process requiring communication from device 1104 by which certain analytics (e.g., IP address) are gathered.

With respect to the account opening in New York, WCS 100 determined, according to one or more identities as are discussed in relation to FIG. 5 (i.e., core, expressed, government, and social identities) a first collective identity (see FIG. 8A at 822) corresponding to the TA 1102 who, as assessed by WCS 100, was not a WE and recommended the account opening to proceed. By the time the TA 1102 has opened the account at bank 1112 in Pennsylvania, WCS 100 has cross-referenced various updates for data already ingested through external data stores 180 (see FIG. 8A at 823), such as property records and records maintained by WCS 100 subscribed entities including Bank 1108. As a result of ingestion of the updates, WCS 100 can formulate an updated, first collective identity for the TA 1102 and then compare that updated, first collective identity to one or more predetermined thresholds as are discussed above (see FIG. 8A at 824). Here, an exemplary threshold against which the updated, first collective identity can be measured can comprise at least a predetermined movement threshold indicating, as of the ingestion at 822, the update at 823, and the comparing at 824, that the purchase of the residence at 456 Iris Lane (as indicated by addition to property records in the intervening time between account openings at Banks 1108 and 1112) qualifies the identity at the time of the comparing as a final collective identity (see FIG. 8A at 825). That is, such a final collective identity can indicate that TA 1102 is associated with both the residence at 123 Jane Street in New York and that at 456 Iris Lane in Pennsylvania. Such a final collective identity can be corroborated for the TA 1102 using ingestion of any publicly available social media registration (e.g., passively obtained analytics) indicative of operation of device 1104 at one or more of the residences. In the above exemplary case illustration, it will be recognized that WCS 100 can, in regard to jurisdictional boundaries such as boundary 1110 between contiguous jurisdictions, analyze data that can contribute to formulation of a final collective identity. Similarly, WCS 100 can likewise analyze data sourced from non-contiguous jurisdictions.

In referring to FIG. 9, there is illustrated a conceptual diagram of organizing one or more aggregated identity base 175 data relative to determining watchlist tags for a TA based on a corresponding final collective identity. For instance, for the TA "Jae Kim" serving as an applicant according to the interface of FIG. 4, WCS 100 may institute the variously shown analyses 910, 920, 930, and 940 on watchlist data and other AID to uncover data that may be basis for watchlist tags against which the input "Jae Kim" may be compared. Thus, in accordance with inspection of the watchlist data and other AID data processed by WCS 100, it can be appreciated that potential watchlist tags 970 can be discerned as, at least, a first name including "Jae," a surname of "Kim," a DOB of 1993 or 1994, a role of "Abductor," and a crime of "Human Trafficking," together with uncovered facial imaging indicating a tag of male gender. In this regard, WCS 100 can, for instance, confirm the potential tags as listed due to inspection of the watchlist data and other AID that has been processed. For example, and with respect to analysis 930, implicit features (see 950) including DOB can be derived relative to stated age of "Jae-Young Kim" and the article publication date of 2022, article sentiment can be characterized as negative for a crime (relative to title of "Westbrook High Child Abduction") that can be mapped to a predicate offense of human trafficking, Kim can be discerned as a male (disqualifying politically exposed person (PEP) Kim in analyses 910, 920) via coreference to article discussion (e.g., "he") and confirmed by facial imaging, and role of "abductor" can discerned via activity described for Kim. By contrast, analysis 940 can be disregarded by WCS 100 as not available to provide watchlist tags since, at least, its negative sentiment (see 960) does not qualify for a crime corresponding to a predicate offense (i.e., AID is focused on sports).

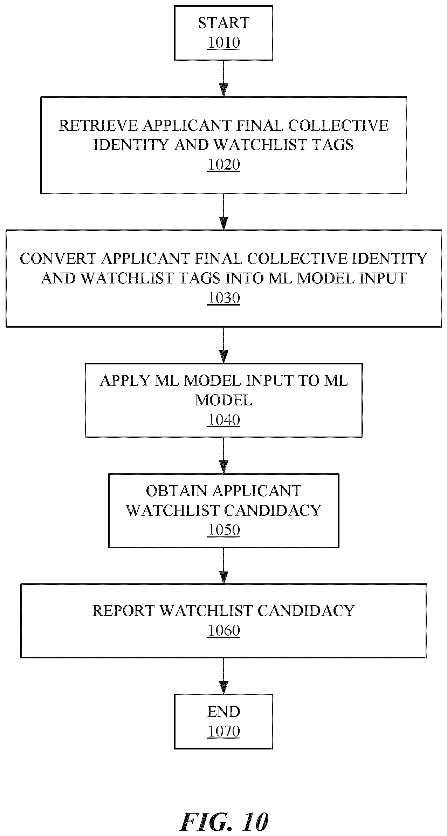

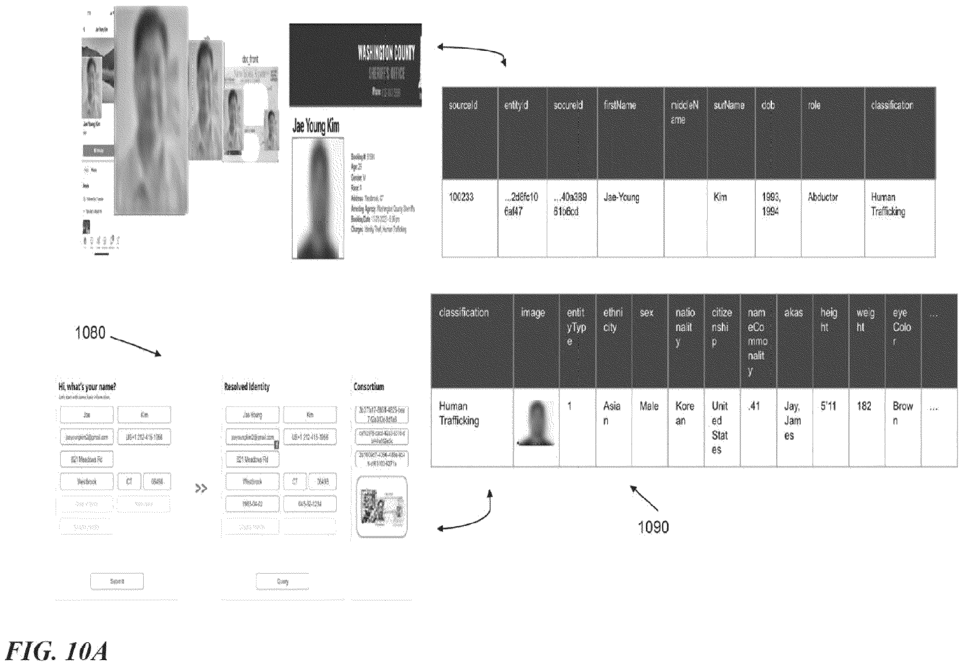

Referring to FIG. 10, there is illustrated a process for determining watchlist candidacy using watchlist tags corresponding to a TA where, as discussed herein, the tags express a commonality of identity characteristics between a TA and a WE. The process can begin at 1010 and proceed to 1020 whereat WCS 100 can retrieve a TA's final collective identity and watchlist tags determined for that identity. At 1030, WCS 100 can convert the final collective identity and the watchlist tags into ML model input, such as similarly described above in regard to entry into a sparse vector. At 1040, WCS 100 can apply the input to a ML model. Here, the model can be trained with supervised learning and use training data that can be obtained from a history of TA collective identities and corresponding watchlist tags. More specifically, each item of the training data can include an instance of a prior TA collective identity matched to one or more watchlist tags. The matching can be performed according to a predetermined algorithm configured to receive TA identity characteristics from a historical record and pair it with results of watchlist feature generation for the record, such as whether a collective identity provoked AID sentiment triggering classification to a predicate offense. For example, prior records can show and/or describe instances of whether a TA engaged in a predicate offense, etc. During the model training, a representation of the collective identity (e.g., histograms of facial images, values representing PII, etc.) can be provided to the model (e.g., each as an element of a vector). Then, the output from the model, i.e., predicted watchlist candidacy, can be compared to the actual matched watchlist candidacy corresponding to a collective identity and, based on the comparison, the model can be modified, such as by changing weights between nodes of the neural network or parameters of the functions used at each node in the neural network (e.g., applying a loss function). After applying each of the pairings of the inputs (collective identities) and the desired outputs (watchlist features representing watchlist candidacy as derived according to, at least, comparison for watchlist tags as discussed herein) in the training data and modifying the model in this manner, the model is trained to evaluate new instances of TA collective identity in order to determine watchlist candidacy for a new TA.

At 1050, WCS 100 can obtain a TA's candidacy which, as discussed above, may be expressed as probability that the TA is or is not a match to a current WE. The candidacy can be a function of the model's application of predetermined weightings for sourcing of watchlist data and other AID. For instance, government issued data may be weighted more heavily than that provided by the private sector. In another instance, matching for tags relative to final collective identities may be a function of weighting different PII portions of a collective identity (e.g., name, DOB, gender, ethnicity, etc.) differently such that, for instance and non-exhaustively, name is weighted more heavily than is gender. At 1060, and prior to ending operations at 1070, WCS 100 can report the watchlist candidacy (any applicable reason codes) to a requester implementing a client 195 as in FIG. 1. As part of the reporting, WCS can, in some implementations, receive feedback as to whether the candidacy is believed to be correct based on, for example, the requester's own knowledge of the TA. Should, for instance, the feedback contravene the reported candidacy, WCS 100 can evaluate the feedback according to predetermined cleansing and/or clustering to determine whether the feedback can be trusted sufficiently to warrant updating of the model in 1040. For example, labels pointing out the same type of prediction error may be grouped together. Such grouping assists in identifying any existing systematic gaps in the modeling performed according to the WCS 100. Clustering can be performed using algorithms such as K-means, hierarchical clustering, etc. Useful dimensions to cluster on may include type of error, data subsets, model confidence, prediction similarity, etc. Feedback labels that do not fit well into any cluster may be set aside for manual review by the WCS 100. In this regard, a human examines these outliers to understand if any common themes exist. Outliers may indicate unusual model failures or rare data subsets. If new types of systematic errors are identified, new clusters can be formed. Otherwise, the outlier labels remain unclustered and still remain valuable as individual feedback. As will be appreciated, the clusters and outliers provide insight into model limitations that can drive iterative feature engineering to address gaps in model design. For example, such engineering may include adding features to better detect subgroups of data for which model performance was not optimal. The improved model is then deployed, generating opportunity for new feedback, and the loop continues. In one or more instances, the model may be updated in various respects (e.g., model parameters such as assigned weightings); if not, model parameters (such as assigned weightings) are maintained.

Referring to FIG. 10A, there is illustrated a conceptual diagram demonstrating a comparison, for final collective identities, that informs a watchlist candidacy as may be determined according to FIG. 10. That is, as has been learned from the discussion above, WCS 100 may build one or more final collective identities respectively corresponding to both a TA and/or a WE. Here, the comparison(s) 1080, 1090 of the TA Jae Young Kim, born in 1983, between WE Jae Young Kim, born in 1993, buttressed by facial imaging confirming the age discrepancy, yields the result that, though other identity characteristics (e.g., name, ethnicity, residence city, gender, etc.) match, that TA Kim is, because of the age discrepancy, unlikely to be a WE in this instance of comparison. Thus, it will appreciated based on the discussions herein that, because of the derivations of the example collective identities as informed by their incumbent implicit features derived from watchlist data and other AID, that determined watchlist tags can serve to optimize one-to-one- comparison for identity characteristics on which watchlist candidacy may be grounded.

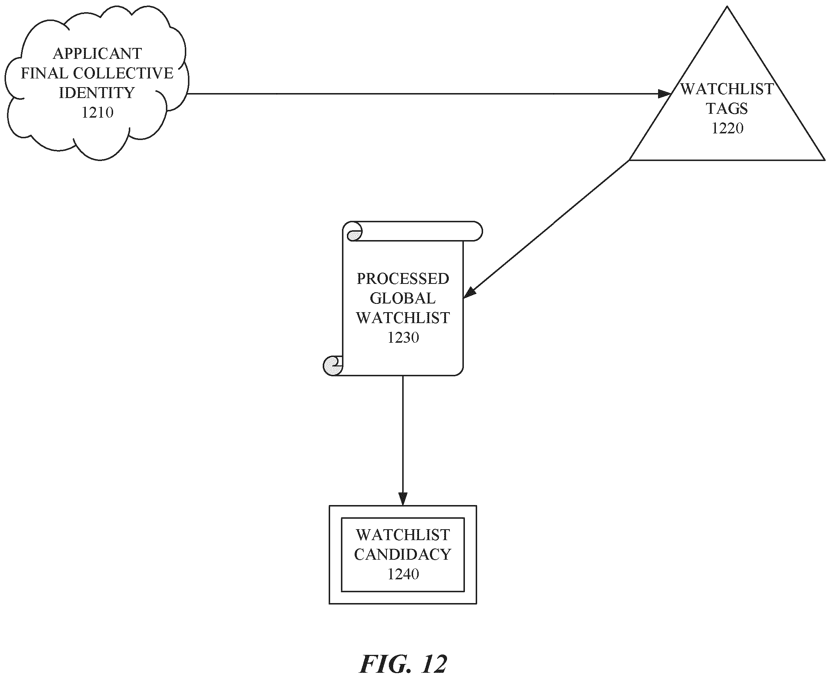

Referring to FIG. 12, there is illustrated a conceptual diagram, in accordance with at least FIGS. 7-8 and 10, for determining a watchlist candidacy. In these regards, WCS 100 can retrieve identity characteristics for one or more of a TA and a WE so as to arrive at a respective final collective identity 1210. Using these identities, WCS 100 can determine watchlist tags 1220 which can be constructed using identity characteristics for the identities according to, for instance, FIG. 7. In other words, each of such tags can be a matrix of collected or aggregated identity characteristics (e.g., [name, residence, DOB, social media registration]). Once the tags are ascertained, comparison for a TA whose identity corresponds to the tags can be made against processed global watchlist data and other AID 1230 compiled by WCS 100 as described herein. Using this comparison, a watchlist candidacy 1240 for a TA can be determined (see, e.g., FIG. 10).

In view of the foregoing, it will be recognized by one of skill in the art that the system and methodologies disclosed herein can be applied in various contexts. For example, it is possible to implement the systems and methodologies of the present disclosure in connection with transaction requests as they are presented to the system in connection with decision making (i.e. as TAs are considered for watchlist candidacy in connection with these TAs seeking to process transactions). It is also possible for the systems and methodologies of the present disclosure to be implemented in connection with monitoring services and related applications. In this case, specific individuals and/or sets of individuals may be monitored over time with respect to their identities being added to a watchlist or similar database. Aggregated identities and collective identities and the leveraging thereof as described herein may also be applied in the context of such monitoring services and/or applications.

**In** these ways, and in view of the entirety of the discussions presented hereinabove, it can be understood that WCS 100 does not merely conduct screening for watchlist data, but uses that data to find, in real time and for continually received data, new connections and associations for TAs and WEs that are distilled to logical components in order to more accurately define a watchlist candidacy.

The present embodiments are not limited to the particular embodiments illustrated in the drawings and described above in detail. Those skilled in the art will recognize that other arrangements could be devised. The present embodiments encompass every possible combination of the various features of each embodiment disclosed. One or more of the elements described herein with respect to various embodiments can be implemented in a more separated or integrated manner than explicitly described, or even removed or rendered as inoperable in certain cases, as is useful in accordance with a particular application. While the present embodiments have been described with reference to specific illustrative embodiments, modifications and variations of the present embodiments may be constructed without departing from the spirit and scope of the present embodiments as set forth in the following claims.

While the present embodiments have been described in the context of the embodiments explicitly discussed herein, those skilled in the art will appreciate that the present embodiments are capable of being implemented and distributed in the form of a computer-usable medium (in a variety of forms) containing computer-executable instructions, and that the present embodiments apply equally regardless of the particular type of computer-usable medium which is used to carry out the distribution. An exemplary computer-usable medium is coupled to a computer such the computer can read information including the computer-executable instructions therefrom, and (optionally) write information thereto. Alternatively, the computer-usable medium may be integral to the computer. When the computer-executable instructions are loaded into and executed by the computer, the computer becomes an apparatus for practicing the embodiments. For example, when the computer-executable instructions are loaded into and executed by a general-purpose computer, the general-purpose computer becomes configured thereby into a special-purpose computer. Examples of suitable computer-usable media include: volatile memory such as random access memory (RAM); nonvolatile, hard-coded or programmable-type media such as read only memories (ROMs) or erasable, electrically programmable read only memories (EEPROMs); recordable-type and/or re-recordable media such as floppy disks, hard disk drives, compact discs (CDs), digital versatile discs (DVDs), etc.; and transmission-type media, e.g., digital and/or analog communications links such as those based on electrical-current conductors, light conductors and/or electromagnetic radiation.

Although the present embodiments have been described in detail, those skilled in the art will understand that various changes, substitutions, variations, enhancements, nuances, gradations, lesser forms, alterations, revisions, improvements and knock-offs of the embodiments disclosed herein may be made without departing from the spirit and scope of the embodiments in their broadest form.

## Claims

1. A method of determining watchlist candidacy, the method comprising:
receiving identity characteristics corresponding to a transaction applicant (TA);
receiving identity characteristics corresponding to a watchlist entity (WE);
receiving one or more aggregated identity data (AID) corresponding to one or more of the identity characteristics corresponding to the TA and the WE;
determining, based on the identity characteristics corresponding to the TA and the one or more AID corresponding to one or more of the identity characteristics corresponding to the TA and the WE, a first collective identity of the TA;
determining, based on the identity characteristics corresponding to the WE and the one or more AID corresponding to one or more of the identity characteristics corresponding to the TA and the WE, a first collective identity of the WE,
receiving, in real time and according to a predetermined schedule, one or more of (a) one or more further identity characteristics corresponding to a TA, (b) one or more further identity characteristics corresponding to the WE, (c) one or more further AID corresponding to one or more of the identity characteristics corresponding to the TA and the WE, or (d) any combination thereof,
based on one or more of (a)-(d), updating the first collective identity of the TA and/or the first collective identity of the WE,
comparing one or more of a respective identity characteristic corresponding to the updated, first collective identity of the TA and/or one or more of a respective identity characteristic corresponding to the updated, first collective identity of the WE to a predetermined identity characteristic threshold, whereby meeting or exceeding the predetermined threshold is determinative of whether the updated, first collective identity of the respective TA and/or the WE is a final collective identity thereof;
based on the comparing, determining the updated, first collective identity or the collective identity as of the comparing, of the respective TA and/or the WE, to be a respective final collective identity of the TA and/or the WE as of the comparing,
wherein, in response to the collective identity as of the comparing, of the respective TA and/or the WE, meeting or exceeding the predetermined threshold, the collective identity as of the comparing is determined as the respective final collective identity of the TA and/or the WE;
obtaining, via unsupervised machine learning and long short-term memory (LSTM) modeling on the final collective identities of the TA and the WE, one or more watchlist tags comprising a same predicate offense involvement determined for the final collective identities of the TA and the WE, the predicate offense involvement being determined via natural language processing (NLP) at least on the AID and/or the one or more further AID,
obtaining, via supervised machine learning on the watchlist tags and the final collective identity of the TA, a watchlist candidacy for the TA,
wherein, for the other machine learning on the watchlist tags and the final collective identity of the TA, one or more of (i) the identity characteristics corresponding to the WE and/or the one or more further identity characteristics corresponding to the WE, (ii) the AID corresponding to one or more of the identity characteristics corresponding to the TA and the WE and/or the one or more further AID corresponding to one or more of the identity characteristics corresponding to the TA and the WE, or (iii) any combination thereof, are assigned predetermined weightings which, in response to an evaluation of the watchlist candidacy for the TA, are configured to be varied, according to operation of the other machine learning on the evaluation, for one or more subsequent iterations of the obtaining a watchlist candidacy for the TA.

2. The method of claim 1, wherein:
the identity characteristics corresponding to one or more of the TA and the WE comprise one or more of (e) name, (f) ethnicity, (g) date of birth, (h) residence address, (i) email address, (j) gender, (k) national identification, (l) geolocation data, or (m) any combination thereof.

3. The method of claim 1 or claim 2, wherein:
the predetermined schedule comprises a timing of continuous receipt of one or more of (n) one or more of the identity characteristics corresponding to the TA, (o) one or more of the identity characteristics corresponding to the WE, (p) the one or more of the AID corresponding to one or more of the identity characteristics corresponding to the TA and the WE, or (q) any combination thereof, or a timing of when one or more of the identity characteristics corresponding to the TA are received.

4. The method of any preceding claim, wherein:
the updating and the comparing are conducted in real time.

5. The method of any preceding claim, wherein:
the predetermined identity characteristic threshold corresponds to one or more of (r) movement of the TA and/or the WE, (s) social media registration of the TA and/or the WE, (t) a threshold corresponding to one or more of the AID, or (u) any combination thereof.

6. The method of any preceding claim, wherein:
the receiving (a)-(d), the updating, and the comparing are performed iteratively for the predetermined schedule.

7. The method of any preceding claim, wherein:
the one or more watchlist tags each comprise a trait and/or identity characteristic shared between the TA and the WE.

8. The method of any preceding claim, further comprising:
reporting the watchlist candidacy to a requester thereof;
receiving feedback on the reported watchlist candidacy;
determining whether the feedback is accurate according to the final collective identity of the TA;
based on the determining, updating at least the other machine learning.

9. The method of any preceding claim, wherein:
the watchlist candidacy comprises a probability that the final collective identity of the TA matches the final collective identity of the WE.

10. The method of any preceding claim, wherein:
the obtained watchlist candidacy is employed in connection with an identity monitoring service.

11. A computing system for determining watchlist candidacy, the computing system comprising:
one or more processors; and
one or more memories storing instructions that, when executed by the one or more processors, cause the computing system to perform a the method of any preceding claim.
